# EUROPEAN PATENT SPECIFICATION

(11) **EP 1 270 364 B1**
(45) Date of publication and mention of the grant of the patent: **21.01.2009**
(21) Application number: 02254434.0
(22) Date of filing: 25.06.2002
(51) Int. Cl.: B62B 3/06, B60P 1/02, B62B 3/04

(54) **Improvements in or relating to pallet trucks**
Verbesserungen in oder in Bezug auf Palettenhubwagen
Améliorations apportées ou se rapportant à des transpalettes

(30) Priority: 25.06.2001 GB 0115482
(43) Date of publication of application: 02.01.2003
(73) Proprietor: Parry, David B., Kenilworth, Warwickshire CV8 2AW (GB)
(72) Inventor: Parry, David B., Kenilworth, Warwickshire CV8 2AW (GB)
(74) Representative: Gray, James

(56) References cited:
- GB-A- 2 050 310
- NL-C- 1 002 174
- US-A- 3 143 358

## Description

The present invention relates to pallet trucks.

A pallet truck is a known device which is utilised to enable laden pallets to be moved over smooth surfaces, for example in a warehouse. Such a truck typically comprises a wheeled "U" shaped frame, similar in shape to that of the fork of a fork-lift truck. The frame is provided with wheels or rollers spaced in a tricycle arrangement with a roller provided on the underside of each fork, and a third set of wheels or rollers provided midway between the forks on a member extending therebetween. The third set of wheels are typically pivotable in the manner of a castor so as to enable the truck to be moved over a surface in any given direction.

Disposed between the third set of wheels and the frame is a hydraulic ram which may be extended so as to elevate the frame. Typically the hydraulic ram of such a pallet truck enables the frame to raised and lowered within a range of around 100 mm. In use the frame is positioned under a load and the ram extended so that the load is lifted by the frame. An operator can subsequently manoeuvre the pallet truck by a handle thereof so as to move the load to a desired location. High lift pallet trucks having an elevation range greater than 100 mm are also available. Such high lift trucks are commonly referred to as stacking trucks.

In addition to manually operated pallet trucks, i.e. manual operation of the hydraulic ram and subsequent movement of the truck, motorised or powered pallet trucks are also available. In a powered pallet truck there is provided a power source, such as a battery, which is utilised to effect lifting and lowering of the frame and movement of the truck as a whole. The battery, control apparatus and a platform upon which an operator can stand are provided to the rear of the "U"-shaped frame. Driven, steerable wheels are provided below the platform.

Pallet trucks of the type described above are less than ideal where is required to slide a load laterally on to or off of one side of the frame due to the inherent instability of the tricycle wheel arrangement when operating in this manner.

NL 1002174 discloses a wheeled frame which can be associated with a pallet truck. The pallet truck can be connected to the frame in such a manner that the pallet truck and frame can be raised and lowered as one by wheels positioned centrally on either side of the frame.

According to the present invention there is provided a lifting frame comprising a stable wheeled chassis, a lifting bed articulated to said chassis, and lifting means operable to raise and lower the lifting bed, wherein the lifting means are defined by a pallet truck with the wheel arrangement below the lifting ram removed, characterised in that the pallet truck is operable to raise and lower the lifting bed relative to the chassis to a desired height, and the lifting bed is articulated to the chassis by pivotable link members extending between axles which traverse the chassis and brackets of the lifting bed respectively.

The chassis, by having a wider track than the pallet truck, has a more stable configuration that of a pallet truck on its own. The term pallet truck is intended to encompass motorised and non-motorised pallet trucks, stacking trucks and their equivalents.

In a preferred embodiment the chassis is provided with a wheel at each operable corner. In such an embodiment the chassis has a configuration similar to that of a conventional four wheeled vehicle having four wheels paired on two notional axles. In a preferred embodiment the chassis is substantially rectangular.

The lifting bed is preferably provided with means adapted to assist the sliding of objects supported thereon. Said means may take the form of a plurality of rollers. In one embodiment the rolling axes of the rollers may be substantially perpendicular to the rolling axes of the chassis wheels. Alternatively the lifting bed may be provided with a low friction surface, for example a surface including a low friction material such as PTFE compound. The low friction material may be provided on rails of the lifting bed. The lifting bed may further be provided with means to assist the loading and unloading of objects. Said means may comprise a movable engagement member adapted to attach to an object, the engagement member being movable to pull or push the load onto or off of the lifting bed. The engagement member may be magnetic.

The lifting bed may be articulated to the chassis by the provision of two spaced pinned links. In an alternative embodiment the lifting bed may be connected directly to the pallet truck, for example to the forks thereof. Where a non-motorised pallet truck is utilised it is preferably connected to a cross member of the chassis. The connection may be made by the provision of a bracket on the cross member, which bracket is adapted to receive a pin passing through a portion of the pallet truck. Preferably the longitudinal axis of said pin is aligned with an axis of a pair of wheels of said chassis.

In the alternative instance where a motorised pallet truck is utilised it may be connected to the lifting bed. Connection may be effected by any appropriate means, for example threaded fasteners, such as nuts and bolts, provided between the frame of the pallet truck and the lifting bed. In such an embodiment the chassis may be adapted so as to enable the motorised pallet truck to be easily connected thereto. For example the chassis may be provided with one or more temporarily removable members which can be removed so as to allow the truck to be driven into the chassis before subsequent connection to the lifting bed. The or each removable member can then be refitted to the chassis.

An embodiment of the present invention will now be described with reference to the accompanying drawings in which:
Figure 1 shows a partial plan view of a lifting frame according to a first embodiment of the present invention; and
Figure 2 shows a cross-section side view of the frame as indicated by arrows A-A on figure 1.

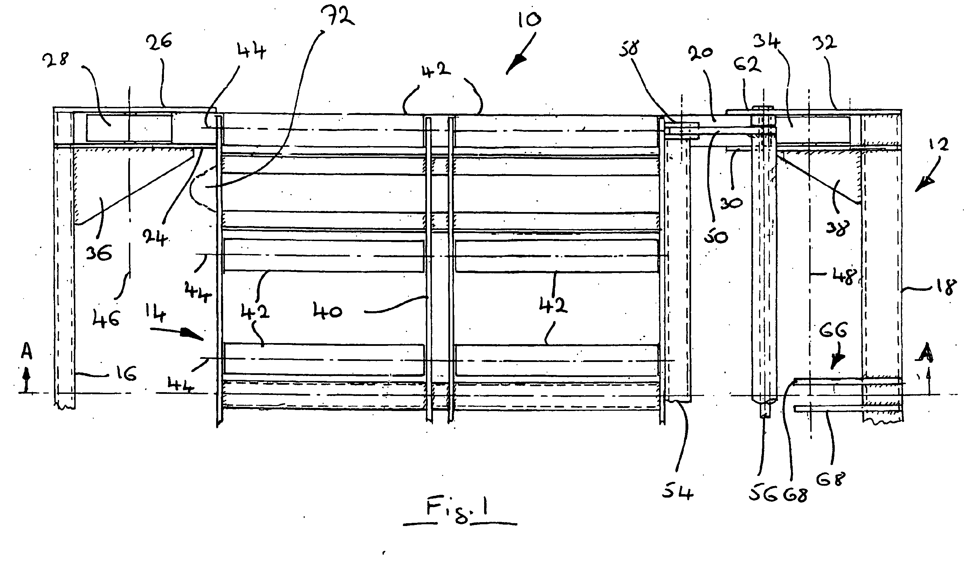

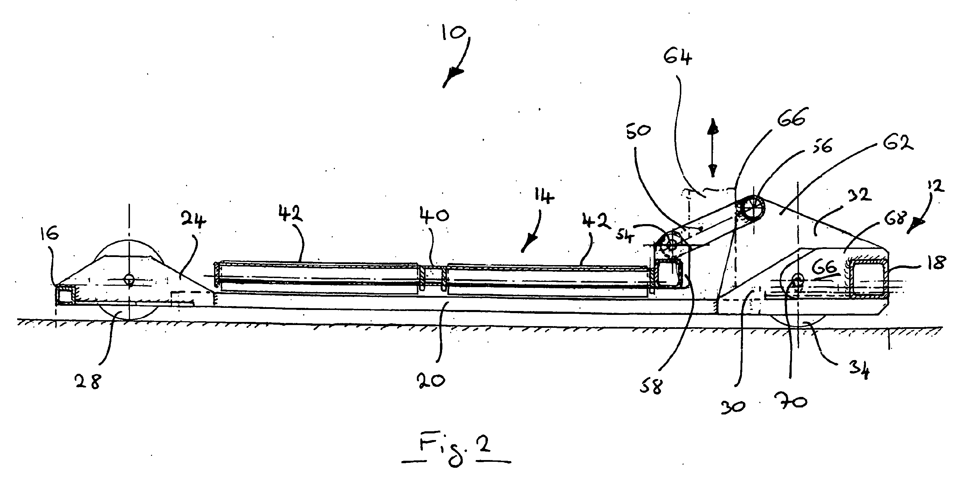

Referring firstly to the figures 1 and 2 there is shown a lifting frame generally designated 10 comprising a wheeled chassis 12 and a lifting bed 14. The chassis 12 comprises front and rear cross members 16, 18 and a pair of lateral chassis rails, only one of which is shown 20. The front cross member 16 is connected to the chassis rails 20 by spaced inner and outer pairs of plates 24, 26. The plates 24, 26 are adapted to receive and support respective front wheels 28 of the chassis. Similar pairs of spaced inner and outer plates 30, 32 are utilised to connect the chassis rails 20 to the rear cross member 18 and which plates 30, 32 receive and support respective rear wheels 34 of the chassis 12. Gusset plates 36, 38 are utilised between the inner plates 24, 30 and the cross members 16, 18.

The lifting bed 14 comprises a ladder frame 40 having a plurality of rollers 42 to permit items to be slid onto and off of the lifting bed 14. The rotational axes 44 of the rollers 42 are substantially perpendicular to the rotational axes 46, 48 of the chassis wheels 28, 34. The lifting bed 14 is articulated to the frame 12 by means of link members of which only one is shown 50 pivotally connected therebetween. The link members 50 are pivotally connected to respective axles 54, 56 traversing the lifting bed 14 and chassis 12, 14. The lifting bed axle 54 is located between opposed brackets 58 of the ladder frame 40. The chassis axle 56 is provided between upwardly extending portions 62 of the outer plates 32 connected to the rear cross member 18.

Movement of the lifting bed 14 is effected by the provision of a pallet truck indicated by broken line 64. The lifting ram (not shown) of the pallet truck 64 is secured to a bracket 66 positioned in the middle of the rear cross member 18. To effect connection of the pallet truck 64, the wheel arrangement normally present below the lifting ram is removed and the ram secured to the bracket 66. The bracket 66 comprises spaced flanges 68 having aligned holes 70 therethrough. The through axis of the holes 70 is aligned with the rotational axis of the rear wheels 34. The forks 72 of the pallet truck rest against the underside of the lifting bed 14. The track of the chassis 12 is wider than that of the pallet truck such that stabiliser wheels of the forks 72 may be deployed unimpeded.

In use, the lifting frame 10 and pallet truck 64 combination can easily be moved over a flat surface to a desired position. In the embodiment shown the wheels 28, 34 of the chassis 12 are fixed and hence the chassis can only be moved in a straight line fore and aft. In such an embodiment guide means, typically in the form of a rail, are provided on said flat surface. The frame 10 can be moved along the rail to a desired position and then maintained in said position by the use of appropriate braking means, for example chocks. The lifting ram may be extended so as to elevate the lifting bed 14 such that it corresponds to the height of a support adjacent the frame 10. An item present on the support, for example a crate or a box shaped battery, can be slid onto the lifting bed 14. The frame 10 can then be moved to a desired delivery position for the item, the lifting bed 14 raised or lowered to a desired delivery height, and the item slid from the lifting bed 14.

The above described embodiment is movable manually by an operator pushing or pulling an appropriate grab handle. Conveniently the grab handle may be defined by the operating handle of the pallet truck 64.

The above described embodiment utilises a manually operable pallet truck however it will be understood that the lifting frame 10 is adaptable for use with a motorised pallet truck. In such an embodiment connection between the lifting frame 10 and the pallet truck is effected between the lifting bed 14 and the pallet truck forks 72. The connection may be made by any appropriate means such as, for example, threaded fasteners passing through aligned holes of the lifting bed 14 and forks 72. In such an embodiment the rear cross member 18 may be temporarily removable so as to enable the pallet truck to be driven into the chassis 12 before connection to the lifting bed 14 is made. The use of a motorised pallet truck enables the lifting frame/pallet truck combination to driven and steered with the pallet truck controls.

The present invention enables a conventional pallet truck or stacking truck, either motorised or non-motorised, to be readily adapted to receive and deliver loads which could not normally be accommodated thereby.

## Claims

1. A lifting frame (10) comprising a stable wheeled chassis (12), a lifting bed (14) articulated to said chassis (12) and lifting means operable to raise and lower the lifting bed (14) **characterised in that** the lifting means are defined by a pallet truck (64) with the wheel arrangement below the lifting ram removed, the pallet truck (64) is operable to raise and lower the lifting bed (14) relative to the chassis (12) to a desired height, and the lifting bed (14) is articulated to the chassis (12) by pivotable link members (50) extending between axles (56, 54) which traverse the chassis (12) and brackets (58) of the lifting bed (14) respectively.

2. A lifting frame (10) as claimed in claim 1 wherein the chassis (12) has a track wider than that of the pallet truck.

3. A lifting frame (10) as claimed in claim 1 or claim 2 wherein the chassis (12) is provided with a wheel (28, 34) at each operable corner.

4. A lifting frame (10) as claimed in any of claims 1 to 3 wherein the chassis (12) is substantially rectangular.

5. A lifting frame (10) as claimed in any preceding claim wherein the pallet truck (64) is connected to a cross member (18) of the chassis (12).

6. A lifting frame (10) as claimed in claim 5 wherein said connection to the chassis (12) is made by the provision of a bracket (66) on the cross member (18), which bracket (66) is adapted to receive a pin passing through a portion of the pallet truck (64).

7. A lifting frame (10) as claimed in claim 6 wherein the longitudinal axis of said pin is aligned with an axis of a pair of wheels (34) of said chassis (12).

8. A lifting frame (10) as claimed in any preceding claim wherein the lifting bed (14) is provided with means adapted to assist the sliding of objects supported thereon.

9. A lifting frame (10) as claimed in claim 8 wherein said means comprise a plurality of rollers.

10. A lifting frame (10) as claimed in claim 9 wherein the rolling axes of the rollers (42) are substantially perpendicular to the or each rolling axis of the chassis wheels (28,34).

11. A lifting frame (10) as claimed in claim 8 wherein the lifting bed (14) is provided with a low friction surface.

12. A lifting frame (10) as claimed in any of claims 1 to 11 wherein the lifting bed (14) is attached to the forks (72) of the pallet truck (64).

## Patentansprüche

1. Hubrahmen (10) mit einem stabilen Radfahrgestell (12), einem an das Fahrgestell (12) angelenkten Hubgestell (14) und Hubeinrichtungen, ausgebildet zum Anheben und Absenken des Hubgestells (14),
**dadurch gekennzeichnet, dass**
die Hubeinrichtungen durch einen Palettenwagen (64) definiert sind, wobei die Radanordnung unter dem Hubkolben entfernt ist,
der Palettenwagen (64) zum Anheben und Absenken des Hubgestells (14) relativ zum Fahrgestell (12) zu einer gewünschten Höhe ausgebildet ist, und
das Hubgestell (14) an das Fahrgestell (12) durch schwenkbare Verbindungselemente (50) angelenkt ist, die sich zwischen Achsen (56, 54) erstrecken, die quer zum Fahrgestell (12) bzw. zu Trägern (58) des Hubgestells (14) verlaufen.

2. Hubrahmen (10) nach Anspruch 1, bei welchem das Fahrgestell (12) eine weitere Spur als jene des Palettenwagens hat.

3. Hubrahmen (10) nach Anspruch 1 oder 2, bei welchem das Fahrgestell (12) mit einem Rad (28, 34) an jeder Betriebsecke versehen ist.

4. Hubrahmen (10) nach einem der Ansprüche 1 bis 3, bei welchem das Fahrgestell (12) im Wesentlichen rechtwinkelig ist.

5. Hubrahmen (10) nach einem der vorherigen Ansprüche, bei welchem der Palettenwagen (64) mit einem Querelement (18) des Fahrgestells (12) verbunden ist.

6. Hubrahmen (10) nach Anspruch 5, bei welchem die Verbindung mit dem Fahrgestell (12) durch das Vorsehen eines Trägers (66) an dem Querelement (18) gemacht ist, wobei der Träger (66) ausgebildet ist, um einen durch einen Abschnitt des Palettenwagens (64) laufenden Stift aufzunehmen.

7. Hubrahmen (10) nach Anspruch 6, bei welchem die Längsachse des Stifts zu einer Achse eines Radpaares (34) des Fahrgestells (12) ausgerichtet ist.

8. Hubrahmen (10) nach einem der vorherigen Ansprüche, bei welchem das Hubgestell (14) mit einer Einrichtung versehen ist, ausgebildet zum Unterstützen des Gleitens von darauf getragenen Gegenständen.

9. Hubrahmen (10) nach Anspruch 8, bei welchem die Einrichtung mehrere Rollen aufweist.

10. Hubrahmen (10) nach Anspruch 9, bei welchem die Rollachsen der Rollen (42) im Wesentlichen senkrecht zu der oder jeder Rollachse der Fahrgestellräder (28, 34) sind.

11. Hubrahmen (10) nach Anspruch 8, bei welchem das Hubgestell (14) mit einer Oberfläche geringer Reibung versehen ist.

12. Hubrahmen (10) nach einem der Ansprüche 1 bis 11, bei welchem das Hubgestell (14) an Gabeln (72) des Palettenwagens (64) angebracht ist.

## Revendications

1. Cadre de levage (10) comprenant un châssis stable à roues (12), un lit de levage (14) articulé sur ledit châssis (12) et des moyens de levage opérationnels pour lever et baisser le lit de levage (14), **caractérisé en ce que** les moyens de levage sont définis par un transpalette (64) avec l'agencement de roues en dessous du vérin de levage déposé, le transpalette (64) est opérationnel pour lever et baisser le lit de levage (14) par rapport au châssis (12) jusqu'à une hauteur souhaitée, et le lit de levage (14) est articulé sur le châssis (12) par l'intermédiaire d'éléments de liaison pivotants (50) s'étendant entre des axes (56, 54) qui traversent le châssis (12) et des supports (58) du lit de levage (14) respectivement.

2. Cadre de levage (10) selon la revendication 1, dans lequel le châssis (12) possède une voie de roulement plus large que celle du transpalette.

3. Cadre de levage (10) selon la revendication 1 ou 2, dans lequel le châssis (12) est pourvu d'une roue (28, 34) à chaque coin opérationnel.

4. Cadre de levage (10) selon l'une quelconque des revendications 1 à 3, dans lequel le châssis (12) est sensiblement rectangulaire.

5. Cadre de levage (10) selon une quelconque revendication précédente, dans lequel le transpalette (64) est relié à une traverse (18) du châssis (12).

6. Cadre de levage (10) selon la revendication 5, dans lequel ladite liaison audit châssis (12) est réalisée par la disposition d'un support (66) sur la traverse (18), lequel support (66) est adapté pour recevoir une tige passant à travers une partie du transpalette (64).

7. Cadre de levage (10) selon la revendication 6, dans lequel l'axe longitudinal de ladite tige est aligné avec un axe d'une paire de roues (34) dudit châssis (12).

8. Cadre de levage (10) selon une quelconque revendication précédente, dans lequel le lit de levage (14) est pourvu de moyens adaptés pour aider le coulissement d'objets supportés sur celui-ci.

9. Cadre de levage (10) selon la revendication 8, dans lequel lesdits moyens comprennent une pluralité de rouleaux.

10. Cadre de levage (10) selon la revendication 9, dans lequel les axes de roulement des rouleaux (42) sont sensiblement perpendiculaires au ou à chaque axe de roulement des roues de châssis (28, 34).

11. Cadre de levage (10) selon la revendication 8, dans lequel le lit de levage (14) est pourvu d'une surface à faible frottement.

12. Cadre de levage (10) selon l'une quelconque des revendications 1 à 11, dans lequel le lit de levage (14) est fixé aux fourches (72) du transpalette (64).
